# EUROPEAN PATENT APPLICATION

(11) **EP 4 388 880 A1**
(43) Date of publication of application: **26.06.2024**
(21) Application number: 22216364.4
(22) Date of filing: 23.12.2022
(51) Int. Cl.: A21C 14/00, A21D 13/064, A23J 1/00

(54) **A SYSTEM AND METHOD FOR SEPARATING A DOUGH PREPARED FROM WHEAT FLOUR INTO A GLUTEN-ENRICHED FRACTION AND A STARCH-ENRICHED FRACTION**

(71) Applicant: Cargill, Incorporated, Wayzata, Minnesota 55391 (US)
(72) Inventor: Zalm, Elsbeth, 4612 PS Bergen op Zoom (NL); Koot, Norbert, 4612 PS Bergen op Zoom (NL)
(74) Representative: Jantschy, Jasmin

(57) **Abstract**

The present invention relates to a system for separating a dough prepared from wheat flour into a gluten-enriched fraction and a starch-enriched fraction, the system comprising an annular separation chamber having an outer wall and an inner wall; an inlet for supplying the dough into the separation chamber; a rotation device configured to realize a relative rotation of the inner wall and the outer wall with respect to each other about a common central axis of the inner wall and the outer wall, wherein shear forces exerted on the dough in the annular separation chamber by the outer wall and/or by the inner wall due to said relative rotation during use of the system, effect a separation of the dough in a gluten-enriched fraction and a starch-enriched fraction; an outlet for discharging gluten-enriched and starch-enriched fractions of the dough from the annular separation chamber, wherein the outlet is provided spaced apart from the inlet at a distance in a direction of extension of the central axis; wherein the system has a divider positioned at the outlet, wherein the divider is arranged to provide an inner outlet section between the inner wall of the separation chamber and the divider, and an outer outlet section provided between the outer wall of the separation chamber and the divider. The present invention moreover relates to a process for separating a dough prepared from wheat flour into a gluten-enriched fraction and a starch-enriched fraction.

## Description

### FIELD OF THE INVENTION

The present invention relates to a system and method for separating a dough prepared from wheat flour into a gluten-enriched fraction and a starch-enriched fraction.

### BACKGROUND

The separation of wheat flour into a gluten-enriched and a starch-enriched fraction is an important industrial process. The gluten-enriched fraction comprises isolated gluten proteins that have a wide range of applications. Examples thereof are as texturizing agent, as binding agents, and as wheat flour improvers in the bread-making industry. The starch-enriched fraction can for example be processed into sugar syrups for the food industry or can be or used in industrial applications in general.

Currently, industrial processes to separate gluten from starch always involve at least one so-called wet separation step, such as in the conventional "Martin process" in which wheat flour and water are mixed into a dough and the starch is extracted from the dough by washing with water, leaving a gluten-enriched fraction. Gluten aggregates are formed during mixing and are then washed with water while gently kneading. That way, starch is separated from the slurry by this washing step or by centrifugation with decanters or hydrocyclones, and the non-soluble gluten are recovered from the slurry by sieving followed by drying. Typically, gluten resulting from these processes have a protein content of 75 - 80 %, based on dry matter.

A first disadvantage of these separation processes is that copious amounts of water are used to separate the starch from the gluten by washing and all that water needs to be purified after the process. This is the reason that the current processes are very energy-inefficient and with the increasing demand for cleaner and more energy-efficient production, there is significant room for improvement. A second disadvantage is that during the multiple washing steps, there is a significant loss of soluble proteins as well as loss of gluten-starch and gluten-non-soluble-protein-complexes.

EP 1 881 996 B1 of the present applicant already addresses this problem by providing for a process for making a dough having improved properties and to a gluten enriched fraction and gluten obtained therefrom having improved properties, in particular a higher maximum stress and extensibility. EP 1 881 996 B1 relates to a process comprises the steps of (a) preparing a dough of wheat flour and water; (b) subjecting the dough to a simple shear flow with specific shear stress; and (c) separating the dough into a gluten enriched fraction and a starch enriched fraction.

The present invention is a further improvement to that process and relates to a specific system to separate a dough into a gluten enriched fraction and a starch enriched fraction. In the starting dough, the starch and (gluten) proteins are homogeneously distributed and with the present system, these fractions are separated from each other. The present invention thus addresses one or more of the above problems.

### STATEMENTS OF THE INVENTION

In one aspect, the invention relates to a system for separating a dough prepared from wheat flour into a gluten-enriched fraction and a starch-enriched fraction, the system comprising:
- an annular separation chamber having an outer wall and an inner wall,
- an inlet for supplying the dough into the separation chamber;
- a rotation device configured to realize a relative rotation of the inner wall and the outer wall with respect to each other about a common central axis of the inner wall and the outer wall,
   wherein shear forces exerted on the dough in the annular separation chamber by the outer wall and/or by the inner wall due to said relative rotation during use of the system, effect a separation of the dough in a gluten-enriched fraction and a starch-enriched fraction;
- an outlet for discharging gluten-enriched and starch-enriched fractions of the dough from the annular separation chamber, wherein the outlet is provided spaced apart from the inlet at a distance in a direction of extension of the central axis;
   wherein the system has a divider positioned at the outlet, wherein the divider is arranged to provide
   - an inner outlet section between the inner wall of the separation chamber and the divider, and
   - an outer outlet section provided between the outer wall of the separation chamber and the divider.

In another aspect, the invention relates to a method of separating a dough prepared from a wheat flour into a gluten-enriched fraction and a starch-enriched fraction, using a system according to the present invention. The method comprises:
- supplying the dough via the inlet into the separation chamber;
- realizing, using the rotation device, a relative rotation of the inner wall and the outer wall with respect to each,
   wherein shear forces exerted on the dough in the annular separation chamber by the outer wall and/or by the inner wall due to said relative rotation effect a separation of the dough into a gluten-enriched fraction and a starch-enriched fraction;
- discharging gluten-enriched and starch-enriched fractions of the dough from the annular separation chamber via the outlet;
   wherein, due to the divider positioned at the outlet, one of the gluten-enriched and starch-enriched fractions is discharged via the inner outlet section between the inner wall of the separation chamber and the divider, and the other of the fractions is discharged via the outer outlet section provided between the outer wall of the separation chamber and the divider.

Below several preferred features of the invention are disclosed. These features are applicable to the system as well as to the method in accordance with the present invention.

An advantage of the system and method according to the invention, is that using the system of the invention, the dough is subjected to shear forces, resulting in said separation of the gluten-enriched fraction and a starch-enriched fraction, in a very effective and reliable manner using a system of relatively simple and cost-efficient design. Also, the use of water for the purpose of the separation may be reduced because firstly, dough of a relatively low-moisture content can be separated into the said fractions using the system according to the invention, and secondly, it is not necessary to add water to the dough or to the separation chamber for the purpose of achieving the said separation.

### DESCRIPTION OF THE DRAWINGS

The present invention is described hereinafter with reference to the accompanying schematic drawings in which examples of the present invention are shown and in which like reference numbers indicate the same or similar elements.
Figure 1 shows, in side view and partial cross-section, an example of a system according to the invention;

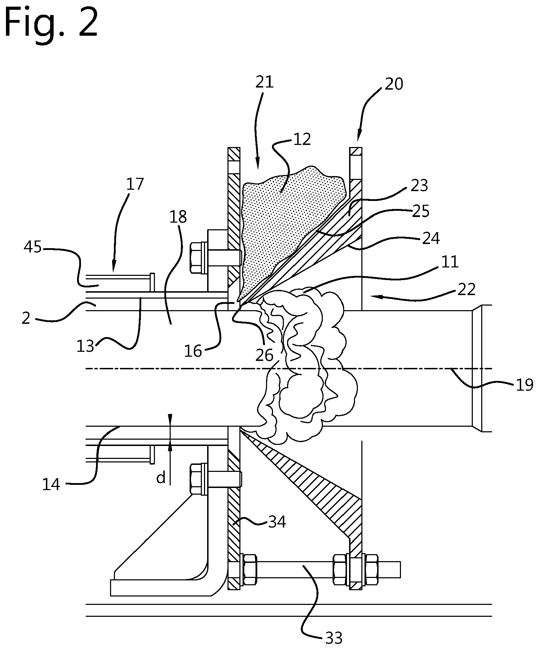

Figure 2 shows a detail of the system of figure 1; and
Figure 3 shows, in side view and partial cross-section, another example of a system according to the invention.

### DETAILED DESCRIPTION

The present invention is elucidated below with a detailed description. Unless otherwise defined or specified, all terms should be accorded a technical meaning consistent with the usual meaning in the art as understood by the skilled person. All parameter ranges include the end-points of the ranges and all values in between the end-points, unless otherwise specified.

When used in these specification and claims, the terms "comprises" and "comprising" and variations thereof mean that the specified features, steps or integers are included. The terms are not to be interpreted to exclude the presence of other features, steps or components.

With gluten-enriched fraction and starch-enriched fraction in the present description is meant fractions that are enriched in either gluten or starch. It is not intended to mean that gluten or starch were added to these fractions, but that a dough is processed in such a manner that the homogeneous distribution of gluten and starch in the dough at the start is altered to that there is a fraction that has more gluten and less starch than the starting dough (fraction that is enriched in gluten, compared to the starting dough, also called gluten-enriched fraction) and there is a fraction that has more starch and less gluten than the starting dough (fraction that is enriched in starch, compared to the starting dough, also called starch-enriched fraction). Both fractions are formed simultaneously, wherein (part of) the starch and gluten are being redistributed from a homogenously distribution to a non-homogenous distribution in the two fractions. According to the present invention, a gluten-enriched fraction has a higher proportion of gluten than the wheat flour that was used as starting material and/or than conventional wheat flour. According to the present invention, a starch-enriched fraction has a higher proportion of starch than the wheat flour that was used as starting material and/or than conventional wheat flour.

The inner wall and/or the outer wall of the separation chamber may have a circular cross section over a length thereof, preferably over the entire length thereof. This is a very effective design of the inner and outer wall by means of which the shear forces on the dough may be effected.

The outer wall of the separation chamber may be formed by a cylindrical or frustoconical shaped outer element. The inner wall of the separation chamber may be formed by a cylindrical or frustoconical shaped inner element. Preferably the outer element has a cylindrical shape and the inner element has a cylindrical shape.

The inlet and the outlet may be provided at opposite outer ends of the annular separation chamber. Thus, the inlet and the outlet define a length of the annular separation chamber. A ratio between a diameter of the outer wall and the length of the annular separation chamber may be between 1:1 and 1:10. Or, in other words, said length may be between 1 and 10 times the diameter.

The divider may comprise a ring shaped divider element, wherein the inner outlet section is between the inner wall of the separation chamber and an inner wall of the ring shaped divider element and wherein the outer outlet section is between the outer wall of the separation chamber and an outer wall of the ring shaped divider element. Such a ring shaped divider element is a very effective and reliable manner of separating the mentioned gluten and starch enriched fractions at the outlet, for the purpose of individually collecting and further transporting or processing both fractions.

Respective surfaces of the inner wall and the outer wall of the ring-shaped divider element may intersect and define a circular edge on a side of the ring-shaped element facing the separation chamber. This way, a kind of knife blade, or wedge shape is realized, by means of which the individual discharge of both fractions is very effective.

The outer wall and/or the inner wall of ring-shaped element may taper outwards from the circular edge in a direction away from the separation chamber. This assists in the individual discharge of both fractions.

A radial distance from the inner wall to the circular edge may be in the range of 20 to 50 percent of a radial distance from the inner wall to the outer wall. Such relative distances realize the individual discharge of both fractions in a reliable manner with only limited 'cross-contamination' between both fractions. Said percentage may be chosen in dependence of the volumetric percentage of gluten in the dough, for example.

In an alternative for the above mentioned ring-shaped element, the divider may comprise a plurality of part circle, that means part ring shaped elements provided spaced apart at a distance in circumferential direction around the inner wall such that the inner outlet section is between the inner wall of the separation chamber and an inner side of the part circle shaped elements facing said inner wall, and wherein the outer outlet section is between the outer wall of the separation chamber and an outer side of the part circle shaped elements facing said outer wall.

The outer wall may be provided in a stationary manner and the rotation device is configured to rotate the inner wall, wherein, during use, the gluten-enriched fraction discharges via the inner outlet section; and wherein the starch-enriched fraction discharges via the outer outlet section. Thus, in an embodiment, the inner wall is rotated using the rotation device, wherein the gluten-enriched fraction discharges via the inner outlet section; and wherein the starch-enriched fraction discharges via the outer outlet section.

A radial distance from the inner wall to the outer wall may be in the range of 1 to 40 mm, preferably of 1 to 20 mm. Said radial distance may be between 0.1 % and 10 % of an inner diameter of the outer wall, such as between 0.1% and 1%.

Different types of wheat flour may be used in the present invention. Wheat flours vary in composition. Wheat flour can differ greatly in composition depending on growth conditions and origin. Generally speaking, wheat flour consists mainly of proteins (9-15 wt.%), moisture (10-15 wt.%), and starch (70-80 wt.%). Also ash (<2 wt.%) and non-starch polysaccharides (2-3 wt.%) are present.

The term gluten refers to a protein mixture that is present in wheat. Within gluten, there are four main proteins, the so-called albumins, glutelins (e.g. glutenin), globulins and prolamins (e.g. gliadin). Gliadin and glutenin typically for the majority of the proteins present in wheat gluten.

Wheat flours also vary in, protein quality, particle size and particle size distribution, depending on the origin and type of wheat (soft wheat and hard wheat) and the milling processes applied to obtain the flour. The term "wheat" herein includes any wheat variety and related grain species, in so far as they comprise starch and viscoelastic gluten in a suitable amount to perform the process. The moisture content of the wheat flour for use in the present process may be below 20 wt.%, such as between 10 and 15 wt.%, based on the total weight of the flour. The protein content of the wheat flour for use in the present process may be between 5 and 20 wt.%. The starch content of the wheat flour that is used as starting material in the present process may be between 65 and 80 wt.%, such as between 70 and 80 wt.%.The ash content of the flour may be less than 2 wt.%, such as less than 1 wt.%, based on the total weight of the flour.

A dough may be prepared by mixing wheat flour (or one or more types of wheat flours) and an aqueous liquid (for example water or a salt solution), and optionally a native wheat starch, to obtain a dough having a moisture content of less than 50 wt.% based on dry weight of the wheat flour. This is an advantage of the present invention, since less water is used than in conventional processes. Native wheat starch as used in the present invention is a starch fraction obtained from a wheat wet separation process, that is known by a person skilled in the art.

The dough may be prepared by any means known to a person skilled in the art, for example by a mixing device.

The aqueous liquid used to prepare the dough is preferably water or a diluted salt (see also below) solution having preferably an ionic strength of 0.05 to 5 M (mol/l).

During the separation process the shear is a relevant parameter driving the separation. One way of increasing the impact of the shear is to increase the viscosity of the dough. Several ways are possible for increasing the viscosity of the dough. For example, additional starch in the form of granules may be added to the dough in addition to water and wheat flour. Other means of increasing the viscosity are for example by the addition of viscosity modifiers and/or enzymes. Preferred are enzymes that enhance the separation between starch and gluten, as for instance those disclosed in WO2002/00911A1, and/or generally those that allow a better agglomeration of the gluten. Examples of viscosity modifiers that may be used are salts, such as alkaline (earth) metal salts, for example sodium chloride, or hydrogen peroxide.

The process according to the present invention provides a gluten-enriched fraction and a starch-enriched fraction. The wheat flour used as starting material may comprise between 9 and 15 wt.% of protein and/or between 70 and 80 wt.% of starch, based on dry matter and/or between 10 and 15 wt.% of water, based on dry matter.

The gluten-enriched fraction may comprise at least 30 wt.%, or at least 40 wt.% or at least 50 wt.%, or at least 60 wt.% of protein based on dry matter. This clearly shows that this fraction is enriched in gluten, i.e. has a higher proportion of gluten compared to the starting wheat flour and/or compared to a typical wheat flour.

The present inventors have found that with the inventive system, the gluten-enriched fraction forms as elongate strands which tend to cling around the inner wall of the system, while the starch-enriched fraction forms as a relatively homogenous mass - similar to the dough from which it is separated. The presence of the inventive divider allows the discharge of the gluten-enriched fraction via a separate outlet section than the starch-enriched fraction. Thereby, a very effective and reliable separation of said fractions is achieved.

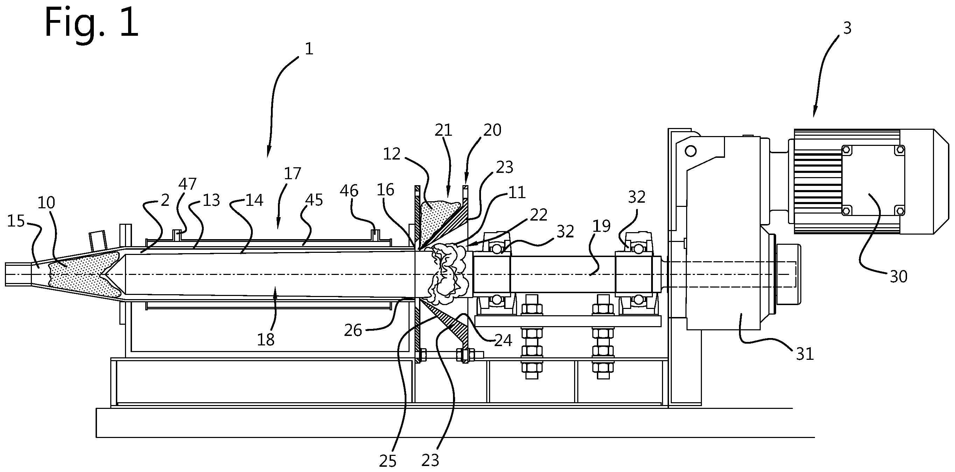

Figure 1 shows, as an example of a system according to the invention, a system 1 for separating a dough 10 prepared from wheat flour into a gluten-enriched fraction 11 and a starch-enriched fraction 12. For this purpose, the system 1 comprises an annular separation chamber2 having an outerwall 13 and an innerwall 14. At least in the present example, both the inner wall 14 and the outer wall 13 of the separation chamber 2 have a circular cross section over the length thereof. The outer wall 13 is cylindrical and is formed by a cylindrical shaped outer element 17. The inner wall 14 is frustoconical and formed by a frustoconical shaped inner element 18. The outer element 17 and the inner element 18 are coaxial with respect to a central axis 19. The inner element 18 is only very slightly frustoconical: its cone angle is about 0.5 degree (angle between a side and the central axis). In an alternative example, the inner wall 14 may be cylindrical or have a cylindrical part followed or preceded by a frustoconical part. The radial distance d from the inner wall 14 to the outer wall 13 is in the range of 1 to 40 mm. in case of a frustoconical inner and/or outer wall, the radial distance is considered to be the average radial distance in the separation chamber over the length thereof. As shown in the example according to the figures, the annular separation chamber 2 can be considered an annular slit.

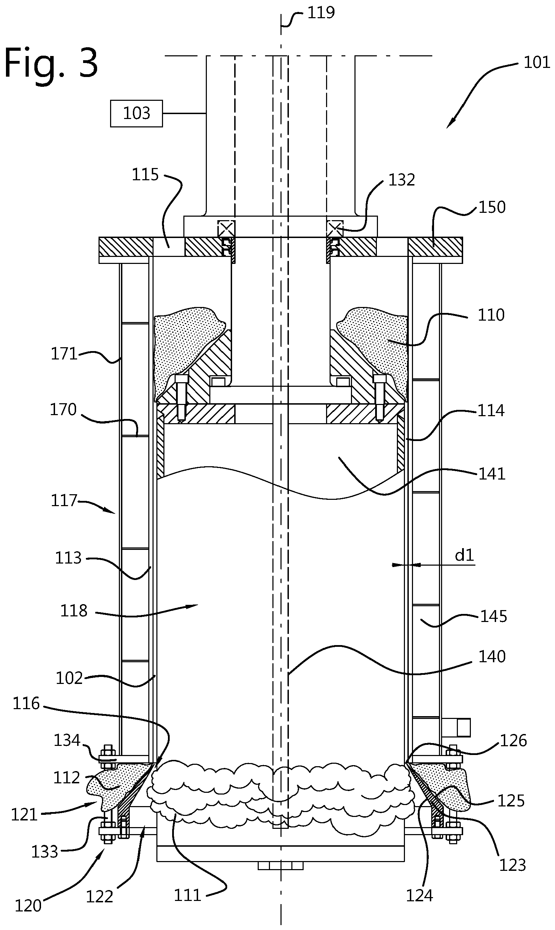

The system 1 further comprises an inlet 15 for supplying the dough 10 into the separation chamber 2 and comprises an outlet 16 for discharging the gluten-enriched fraction 11 and the starch-enriched fraction 12 of the dough 10 from the annular separation chamber 2. The outlet 16 is provided spaced apart from the inlet 15 at a distance in a direction of extension of the central axis 19. The inlet 15 and the outlet 16 define opposite ends of the annular separation chamber 2, that means, they define a length of the annular separation chamber 2. At least in the present example, a ratio between the diameter of the outer wall 13 and the length of the annular separation chamber 2 is about five but said ratio may be larger or smaller, such as between 1:1 and 1:10, for example about 1:1.4 as shown in the example of figure 3 which will be further described below.

The system 1 has a rotation device 3 which is configured to realize a relative rotation of the inner wall 14 and the outer wall 13 with respect to each other about the common central axis 19 of the inner wall 14 and the outer wall 13. At least in the present example, the rotation device 3 rotates the inner element 18, that means thereby the inner wall 14, during use. For this purpose, the rotation device 3 has an electromotor 30 which is connected to the inner element 18 via a gear reduction 31. The inner element 18 is rotatingly supported in bearings 32. A speed of the electromotor, that means a rotational speed of the inner element 18, can be adjusted for example depending on properties like viscosity of the supplied dough.

During use, the dough 10 is supplied to the annular separation chamber 2 in a continuous manner. A rotation of the inner wall 14 relative to the stationary outer wall 13 results in shear forces being exerted on the dough 10 in the annular separation chamber 2. The effect of the dough being forced through the annular separation chamber 2 from the inlet 15 to the outlet 16 is a separation of the dough 10 in a gluten-enriched fraction 11 and a starch-enriched fraction 12.

In order to individually discharge the gluten-enriched fraction 11 and the starch-enriched fraction 12 from the outlet 16, the system 1 further has a divider 20 positioned at the outlet 16. The divider 20 is arranged to provide an inner outlet section 22 between the inner wall 14 of the separation chamber 2 and the divider 20, and an outer outlet section 21 provided between the outer wall 14 of the separation chamber 2 and the divider 20. For this purpose, the divider 20 comprises a ring shaped divider element 23 having a generally frustoconical cross section as shown in the figures. The ring shaped divider element 23 is bolted, via bolts 33, to a flange 34 of the divider by means of which the divider element 23 is connected to a frame of the system 1 and thereby to the stationary outer element 17. The inner outlet section 22 is between the inner wall 14 of the separation chamber 2 and an inner wall 24 of the ring shaped divider element 23 and the outer outlet section 21 is between the outer wall 13 of the separation chamber 2 and an outer wall 25 of the ring shaped divider element 23. The respective surfaces of the inner wall 24 and the outer wall 25 of the ring-shaped divider element 20 intersect and define a circular edge 26 on a side of the ring-shaped element 20 facing the separation chamber 2. The circular edge 26 is positioned in the outlet 16 as figure 3 shows. A radial distance from the inner wall 14 to the circular edge 26 is in the range of 20 to 50 percent of a radial distance from the inner wall 14 to the outer wall 13. The ratio of said radial distances may be chosen dependent on the relative amounts of the gluten-enriched fraction and the starch-enriched fraction. The divider 20 may be axially movable in order to achieve the desired ratio of said radial distances.

During use, the gluten-enriched fraction 11 forms as elongate strands around the inner wall 14, while the starch-enriched fraction 12 forms as a relatively homogenous mass - similar to the dough from which it is separated. As a result of the provision of the divider 20 at the outlet 16, subdividing the outlet 16 in an inner outlet section 22 and an outer outlet section 21, the gluten-enriched fraction 11 discharges via the inner outlet section 22 and the starch-enriched fraction 12 discharges via the outer outlet section 21. Thereby, a very effective and reliable separation of said fractions is achieved. Although not shown in the figures, the fractions may separately be further discharged from the system 1 via respective collection or transport elements.

Optionally, the system 1 may comprise a cooling jacket around the outer element 17, defining a cooling channel 45 through which a coolant may be forced from an inlet 46 to an outlet 47.

Figure 3 shows a system 101 as another example of a system according to the invention, which system 101 may be used for processing larger quantities of dough. System 101 has corresponding features to system 1 and said corresponding features are annotated with the same reference number, wherein 100 is added to each number.

For the purpose of processing larger quantities of dough, the system 101 comprises an annular separation chamber 102 having an outer wall 113 and an inner wall 114. While the inner and outer wall and thus the separation chamber of the system 1 are intended to extend horizontally (although vertically or another angle would be possible as well), the system 101 is intended to be vertically oriented. That means, the inner and outer wall and thus the separation chamber of the system 101 are intended to extend vertically (although horizontally or another angle would be possible as well). At least in the present example, both the inner wall 114 and the outer wall 113 of the separation chamber 102 have a circular cross section over the length thereof. The outer wall 113 is cylindrical and is formed by a cylindrical shaped outer element 117. The outer element 117 is double walled and comprises ribs 170 between the outer wall 113 of the separation chamber 102, forming an inner wall of the double walled outer element 117, and an outer, second wall 171 of the outer element 117. The inner wall 114 is cylindrical (N.B. not frustoconical as in system 1) and formed by a cylindrical shaped inner element 118. The double walled outer element 117 and the inner element 118 are coaxial with respect to a central axis 119. The radial distance d1 from the inner wall 114 to the outer wall 113 may for example be between 4 and 8 mm such as 5.5 mm. In an alternative example, the inner wall 114 and may be frustoconical, similar to the system 1 as described above. In another example, the outer wall 113 may as well be frustoconical, or may be frustoconical while the inner wall is cylindrical.

The system 101 further comprises an inlet 115 for supplying the dough 110 into the separation chamber 102 and comprises an outlet 116 for discharging gluten-enriched and starch-enriched fractions of the dough 110 from the annular separation chamber 102. The outlet 116 is provided spaced apart from the inlet 115 at a distance in a direction of extension of the central axis 119, thereby defining opposite ends of the annular separation chamber and thus a length of the annular separation chamber 102. At least in the present example, a ratio between the diameter of the outer wall 113 and the length of the annular separation chamber 102 is about 1:1.4. For example, if said diameter would be 1 meter, then the length would be about 1.4 meter. Said ratio may be smaller or larger in another example, such as in the range of 1:1 to 1:10, for example.

The system 101 has a rotation device 103 which is only shown highly schematically. The rotation device 103 functions similar to the rotation device 3, that means, it drives the inner element 118 in a rotating manner. The rotation device may for example comprise an electromotor coupled to the rotatable inner element directly or via a transmission means such as a gearbox or belt or chain transmission. The rotation device is thus configured to realize a relative rotation of the inner wall 114 and the outer wall 113 with respect to each other about the common central axis 119 of the inner wall 114 and the outer wall 113. At least in the present example, the rotation device rotates the inner element 118, that means thereby the inner wall 114 but in another embodiment the outer element may be driven and the inner element may be stationary. The inner element 118 is rotatingly supported and vertically supported by bearings 132 which are just schematically shown. Further bearings may be provided at a lower end of the inner element.

During use, the dough 110 is supplied to the annular separation chamber 102 in a continuous manner. A rotation of the inner wall 114 relative to the stationary outer wall 113 results in shear forces being exerted on the dough 110 in the annular separation chamber 102. The effect thereof is a separation of the dough 110 - while it is forced through the annular separation chamber 102 - in a gluten-enriched fraction 111 and a starch-enriched fraction 112. In order to be able to provide cooling to the system 101, a coolant pipe 140 is centrally provided in the inner element. The cooling pipe may be connected to a source for coolant and the cooling pipe 140 debouches in a lower part of an inner space 141 of the inner element 118. The coolant may be any suitable coolant such as a liquid coolant, for example an oil, or water with additives like glycol. Another suitable coolant may be a gas such as air, or a liquefied gas. Cooling impacts the viscosity of the dough and thereby the effectiveness of the separation process. The system 1 may be provided with such cooling as well. Optionally, a coolant may be forced as well trough the double walled outer element 117 which thus also functions to provide a cooling channel 145 through which a coolant may be forced from an inlet 146 to an outlet 147.

In order to individually discharge the gluten-enriched fraction 111 and a starch-enriched fraction 112 from the outlet 116, the system 101 further has a divider 120 positioned at the outlet 116. Like the divider 20, the divider 120 is arranged to provide an inner outlet section 122 between the inner wall 114 of the separation chamber 102 and the divider 120, and an outer outlet section 121 provided between the outer wall 114 of the separation chamber 102 and the divider 120. For this purpose, the divider 120 comprises a ring shaped divider element 123 having a generally frustoconical cross section as shown in the figures. The inner outlet section 122 is between the inner wall 114 of the separation chamber 102 and an inner wall 124 of the ring shaped divider element 123 and the outer outlet section 121 is between the outer wall 113 of the separation chamber 102 and an outer wall 125 of the ring shaped divider element 123. The respective surfaces of the inner wall 124 and the outer wall 125 of the ring-shaped divider element 123 intersect and define a circular edge 126 on a side of the ring-shaped element 123 facing the separation chamber 102. A radial distance from the inner wall 114 to the circular edge 126 is in the range of 20 to 50 percent of a radial distance from the inner wall 114 to the outer wall 113.

The present invention is further elucidated based on the Example below which are illustrative only and not considered limiting to the present invention.

### EXAMPLE

As water citywater (tap water) with a low concentration of H₂O₂ was used at room temperature (25°C). As wheat flour a wheat flour with the following composition was used: moisture content of 13.6 wt.% and protein content of 10.8 wt.% (both based on dry matter).

The moisture content of the wheat flour was determined with a Sartorius infrared moisture analyser. The protein content was determined using the DUMAS method. The amount of gluten refers to the amount of protein measured, and is based on determination of the nitrogen (N) content and multiplying by a standard conversion factor of 5.7 to calculate the measured protein content from the nitrogen content.

A dough was prepared as follows. Wheat flour and native wheat starch mixed in ratio 15:5, 10.5kg/h of this mixture was mixed with 4.82 kg/h water using a pilot scale dough mixer. The dough was prepared at a temperature was 40 °C. The used water contained a small amount of H₂O₂ to promote gluten- agglomeration (approximately 0.1 volume% H₂O₂ in the water stream).

The dough was added to the separation system as shown in figure 1 and the following parameters were used. A chamber with a length of 400 mm and inner diameter of the outer wall of 68.5 mm was used. The inner cylinder having an outer diameter of 60 mm, leaving a radial gap of 4.25 mm. The divider 20 provides a radial gap between the inner wall 14 of the separation chamber and the circular edge 26 of the divider 20 of 2 mm and provides a radial gap between the circular edge 26 of the divider 20 and the outer wall 13 of 2.25 mm. The shear was obtained by using 30 rotations per minute (rpm) of the inner cylinder. Moreover, the outer cylinder is cooled in order to achieve a dough temperature of 10-15°C.

After the process 97.3 grams of a gluten-enriched fraction was obtained and 424.59 grams of a starch-enriched fraction. After freeze-drying the weights were as follows: starch-enriched fraction was 242.79 grams and the gluten-enriched fraction was 48.41 grams. The gluten-enriched fraction comprised 49.14 wt.% of protein (based on dry matter) whereas the starch-enriched fraction comprised only 4.68 wt.% of protein (based on dry matter). This clearly shows that with the system with the divider and process of the present invention works.

Although certain aspects of the invention have been described, the scope of the appended claims is not intended to be limited solely to the examples. The claims are to be construed literally, purposively, and/or to encompass equivalents. The scope of the present invention is defined by the appended claims. One or more of the objects of the invention are achieved by the appended claims.

## Claims

1. A system for separating a dough prepared from wheat flour into a gluten-enriched fraction and a starch-enriched fraction, the system comprising:
- an annular separation chamber having an outer wall and an inner wall,
- an inlet for supplying the dough into the separation chamber;
- a rotation device configured to realize a relative rotation of the inner wall and the outer wall with respect to each other about a common central axis of the inner wall and the outer wall,
wherein shear forces exerted on the dough in the annular separation chamber by the outer wall and/or by the inner wall due to said relative rotation during use of the system, effect a separation of the dough in a gluten-enriched fraction and a starch-enriched fraction;
- an outlet for discharging gluten-enriched and starch-enriched fractions of the dough from the annular separation chamber, wherein the outlet is provided spaced apart from the inlet at a distance in a direction of extension of the central axis;
wherein the system has a divider positioned at the outlet, wherein the divider is arranged to provide
- an inner outlet section between the inner wall of the separation chamber and the divider, and
- an outer outlet section provided between the outer wall of the separation chamber and the divider.

2. The system according to claim 1, wherein the inner wall and/or the outer wall of the separation chamber have a circular cross section over a length thereof.

3. The system according to claim 2, wherein the outer wall of the separation chamber is formed by a cylindrical or frustoconical shaped outer element and wherein the inner wall of the separation chamber is formed by a cylindrical or frustoconical shaped inner element,
preferably wherein the outer element has a cylindrical shape and the inner element has a cylindrical or frustoconical shape.

4. The system according to any one of the preceding claims, wherein the inlet and the outlet are provided at opposite outer ends of the annular separation chamber.

5. The system according to any one of the preceding claims, wherein the divider comprises a ring shaped divider element, wherein the inner outlet section is between the inner wall of the separation chamber and an inner wall of the ring shaped divider element and wherein the outer outlet section is between the outer wall of the separation chamber and an outer wall of the ring shaped divider element.

6. The system according to claim 5, wherein respective surfaces of the inner wall and the outer wall of the ring-shaped divider element intersect and define a circular edge on a side of the ring-shaped element facing the separation chamber.

7. The system according to claim 6, wherein the outer wall and/or the inner wall of ring-shaped element taper outwards from the circular edge in a direction away from the separation chamber.

8. The system according to claim 6 or 7, wherein a radial distance from the inner wall to the circular edge is in the range of 20 to 50 percent of a radial distance from the inner wall to the outer wall.

9. The system according to any one of the preceding claims 1 - 4, wherein the divider comprises a plurality of part circle shaped elements provided spaced apart at a distance in circumferential direction around the inner wall such that the inner outlet section is between the inner wall of the separation chamber and an inner side of the part circle shaped elements facing said inner wall, and wherein the outer outlet section is between the outer wall of the separation chamber and an outer side of the part circle shaped elements facing said outer wall.

10. The system according to any one of the preceding claims, wherein the outer wall is provided in a stationary manner and the rotation device is configured to rotate the inner wall, wherein, during use,
- the gluten-enriched fraction discharges via the inner outlet section; and wherein
- the starch-enriched fraction discharges via the outer outlet section.

11. The system according to any one of the preceding claims, wherein a radial distance from the inner wall to the outer wall is in the range of 1 to 40 mm, preferably of 1 to 20 mm,
preferably wherein said radial distance is in said range and is also between 0.1 % and 1 % of a diameter of the outer wall.

12. A method of separating a dough prepared from a wheat flour in a gluten-enriched fraction and a starch-enriched fraction, using a system according to any one of the preceding claims, the method comprising:
- supplying the dough via the inlet into the separation chamber;
- realizing, using the rotation device, a relative rotation of the inner wall and the outer wall with respect to each,
wherein shear forces exerted on the dough in the annular separation chamber by the outer wall and/or by the inner wall due to said relative rotation effect a separation of the dough in a gluten-enriched fraction and a starch-enriched fraction;
- discharging gluten-enriched and starch-enriched fractions of the dough from the annular separation chamber via the outlet;
wherein, due to the divider positioned at the outlet, one of the gluten-enriched and starch-enriched fractions is discharged via the inner outlet section between the inner wall of the separation chamber and the divider, and the other of the gluten-enriched and starch-enriched fractions is discharged via the outer outlet section provided between the outer wall of the separation chamber and the divider.

13. The method according to claim 12, using a system according to claim 10 or a claim dependent thereof, wherein, using the rotation device, the inner wall is rotated, wherein
- the gluten-enriched fraction discharges via the inner outlet section; and wherein
- the starch-enriched fraction discharges via the outer outlet section.
